# EUROPEAN PATENT SPECIFICATION

(11) **EP 1 547 683 B1**
(45) Date of publication and mention of the grant of the patent: **11.01.2017**
(21) Application number: 03798413.5
(22) Date of filing: 17.09.2003
(51) Int. Cl.: B01J 29/12, C10G 47/16, C10G 47/18, C10G 47/20

(54) **HYDROCRACKING CATALYST AND PROCESS FOR PRODUCTION OF LIQUID HYDROCARBONS**
HYDROCRACK-KATALYSATOR UND VERFAHREN ZUR ERZEUGUNG VON FLÜSSIGEN KOHLENWASSERSTOFFEN
CATALYSEUR D'HYDROCRAQUAGE ET PROCEDE DE FABRICATION D'HYDROCARBURES LIQUIDES

(30) Priority: 24.09.2002 JP 2002277424
(43) Date of publication of application: 29.06.2005
(73) Proprietor: Nippon Oil Corporation, Tokyo 105-8412 (JP)
(72) Inventor: Sakoda, Hisao, Nippon Oil Corporation, Yokohama-shi, Kanagawa 231-0815 (JP); Konno Hirofumi, Nippon Oil Corporation, Yokohama-shi, Kanagawa 231-0815 (JP)
(74) Representative: Ehrner & Delmar Patentbyrå AB
(86) International application number: PCT/JP2003/011849
(87) International publication number: WO 2004/028688

(56) References cited:
- JP-A- 7 323 230
- JP-B1- 50 008 996
- US-A- 4 164 465
- US-A- 4 376 039
- US-A- 4 517 074
- US-A- 4 600 498
- US-A- 5 393 410
- Anonymous: "Micro Activity Testing of FCC Catalysts"[Online] 20 July 2010 (2010-07-20), pages 1-5, XP002592763 Refining Online Retrieved from the Internet: URL:http://www.refiningonline.com/engelhar dkb/crep/TCR2_9.htm> [retrieved on 2010-07-20]
- JOLANTA R. GRZECHOWIAK, ET AL: 'DETERMINATION OF THE HYDROCRACKING AND HYDROISOMERIZATION ACTIVITIES OF CATALYSTS CONTAINING ZEOLITES Y AND ZSM-5 FOR HIGH BOILING HYDROCARBONS CONVERSION' COLLECTION OF CZECHOSLOVAK CHEMICAL COMMUNICATIONS vol. 52, no. 6, 1987, pages 1545 - 1549, XP002974640

## Description

### [Technical Field]

The present invention relates to a catalyst for producing liquid hydrocarbons from paraffinic hydrocarbons in the presence of hydrogen and a process of producing liquid hydrocarbons using such a catalyst.

### [Background Art]

In recent years, demands have been escalating rapidly toward a clean liquid fuel which is low in contents of sulfur and aromatic hydrocarbons. In response to such demands, the fuel oil manufacturers have already been studying various clean fuel production processes. Among these, a process has been considered to be the most prospective in which process paraffinic hydrocarbons such as waxes are hydrocracked in the presence of a catalyst.

In a process of hydrocracking of a paraffinic hydrocarbon, it is important to obtain useful middle distillates with high yields at low temperatures. In addition, the resulting gas oil is necessarily low in pour point. In other words, the development of a highly efficient hydrocracking catalyst which is high in cracking activity and selectivity of middle distillates and can provide the resulting gas oil with low pour point holds the key to the improvement of the process in economical view.

The hydrocracking of a vacuum gas oil is a technology which has been established for more than decades. However, since the difference between the reactivity of a paraffinic hydrocarbon and that of a vacuum gas oil is so significant that it is difficult to use the catalyst for the latter as it is for the hydrocracking of a paraffinic hydrocarbon, the research and development have been continued vigorously to aim the development of a highly efficient catalyst for paraffinic hydrocarbons. Patent applications for such a catalyst, although they are few, have been filed. For example, Japanese Patent Laid-Open Publication No. 6-41549 discloses a catalyst comprising platinum supported on a carrier containing an amorphous aluminosilicate.

However, the amorphous aluminosilicate-containing catalyst is at a satisfactorily higher level of the middle distillate selectivity and the capability to provide the resulting gas oil with low pour point but at a disadvantage in that the cracking activity is low. Contrary to this, the use of a crystalline aluminosilicate such as zeolite instead of an amorphous aluminosilicate can achieve high cracking activity but fails to obtain sufficient middle distillate selectivity and to provide the resulting gas oil with low pour point. That is, there has not been developed a catalyst which satisfies high cracking activity and middle distillate selectivity as well as the low pour point of the resulting gas oil at the same time, leading to a serious hindrance to an economical improvement of the hydrocracking process of paraffinic hydrocarbons.

The object of the present invention is to provide a novel catalyst for hydrocracking a paraffinic hydrocarbon which is satisfactorily high in cracking activity and middle distillate selectivity and successfully provides the resulting gas oil with low pour point so as to improve the productivity of the hydrocracking process.

US-A-4 164 465 discloses a cracking catalyst for promoting the oxidation of carbon monoxide to carbon dioxide during regeneration of the catalyst by the burning of coke therefrom, comprising two distinct crystalline aluminosilicate zeolite particles embedded in an inorganic porous oxide matrix material. The first zeolite is the ultra-stable variety of Y-type zeolite which contains a CO oxidation promoter, such as a Group VIII metal or compound thereof. The second zeolite is a rare earth metal-containing zeolite.

US-A-5 393 410 discloses a catalyst composition useful in converting hydrocarbonaceous oils. The catalyst comprises an ultra stable Y zeolite base, wherein said Y zeolite has a unit cell size greater than 24.55 Å and a crystal size less than about 2.8 microns, an amorphous cracking component, a binder, and a catalytic amount of hydrogenation component selected from the group consisting of a Group VI metal, a Group VIII metal, and mixtures thereof.

### [Disclosure of the Invention]

As a result of an extensive research made by the present inventors, they completed the present invention upon finding that the above-described problems can be solved with a catalyst comprising a crystalline aluminosilicate and an amorphous aluminosilicate at a specific ratio.

That is, the present invention relates to a catalyst for hydrocracking an FT wax produced by Fischer-Tropsch synthesis which comprises (a) a crystalline aluminosilicate and (b) an amorphous aluminosilicate at a weight ratio of 0.04 ≦(a)/(b)≦ 0.2, wherein (a) the crystalline aluminosilicate is a USY-type zeolite and the catalyst further comprises a group VIII metal which is selected from the group consisting of platinum and palladium in an amount of 0.05 to 2 percent by mass based on the total mass of the catalyst and a binder.

Furthermore, the present invention relates to a process for producing a liquid hydrocarbon comprising hydrocracking an FT wax produced by Fischer-Tropsch synthesis using the catalyst as defined above under reaction conditions of a reaction temperature of 250 to 400°C, a hydrogen pressure of 0.5 to 10 MPa and an LHSV of 0.5 to 10 h⁻¹.

The present invention will be described in more detail below.

The term "aluminosilicate" used herein denotes a metal oxide constituted by three elements, i.e., aluminum, silicon, and oxygen. Although another metal element may coexist to an extent that the effects achieved by the present invention are not bothered, the amount of such a metal element is 5 percent by mass or less, preferably 3 percent by mass or less of the total amount of alumina and silica in the oxide. Examples of the metal element which may coexist are titanium, lanthanum, and manganese.

The crystallinity of aluminosilicate can be estimated with the proportion of tetrahedrally coordinated Al atoms in all the Al atoms which can be measured by a solid ²⁷Al NMR spectrum. Crystalline aluminosilicates used in the present invention are those whose proportion of tetrahedrally coordinated Al atoms is 50 percent or more. Any crystalline USY-type zeolite as long as the proportion of tetrahedrally coordinated Al atoms is 50 percent or more can be used in the present invention. Although not restricted, there is usually used those containing 70 percent or more, preferably 80 percent or more of the tetrahedrally coordinated Al atoms. The amorphous aluminosilicates to be used in the present invention are those wherein the proportion of tetrahedrally coordinated Al atoms is 3 percent or less.

Crystalline aluminosilicates eligible for the present invention are USY-type zeolite.

No particular limitation is imposed on the alumina content in the crystalline aluminosilicate to be used in the present invention. However, the content is preferably from 1 to 10 percent by mass and more preferably from 2 to 8 percent by mass.

No particular limitation is imposed on the particle size of the crystalline aluminosilicate to be used in the present invention. However, the particle size is preferably 3 *µ*m or smaller, more preferably 1 *µ*m or smaller, and particularly preferably 0.5 *µ*m or smaller.

Amorphous aluminosilicates eligible for the present invention are so-called silica-aluminas.

No particular limitation is imposed on the alumina content in the amorphous aluminosilicate to be used in the present invention. However, the content is preferably from 4 to 30 percent by mass, more preferably from 8 to 20 percent by mass, and most preferably from 10 to 15 percent by mass.

No particular limitation is imposed on the particle size of the amorphous aluminosilicate. However, the particle size is 10 *µ*m or smaller with the objective of the strength of the resulting catalyst.

No particular limitation is imposed on the pore volume of the amorphous aluminosilicate to be used in the present invention. However, the pore volume is preferably from 0.5 to 0.9 ml/g and more preferably from 0.6 to 0.8 ml/g.

The term "paraffinic hydrocarbon" used herein denotes hydrocarbons the paraffin content of which is 70 percent or more. No particular limitation is imposed on the carbon atom number of the hydrocarbon molecules. However, those having from 10 to 100 carbon atoms are usually used. The catalyst of the present invention is particularly effective for hydrocracking paraffinic hydrocarbons having 20 or more carbon atoms, so-called "wax".

No particular limitation is imposed on the process of producing a paraffinic hydrocarbon which will be the feedstock of the hydrocracking process. Therefore, the catalyst of the present invention is applicable to various paraffinic hydrocarbons which may be petroleum-based or synthetic ones. However, particularly preferred paraffinic hydrocarbons are FT waxes produced by Fischer-Tropsch synthesis.

The catalyst for hydrocracking paraffinic hydrocarbons according to the present invention is characterized in that it comprises (a) a crystalline aluminosilicate and (b) an amorphous aluminosilicate at a weight ratio of 0.04 ≦ (a)/(b) ≦ 0.2. If (a)/(b) is less than 0.01, the cracking activity of the resulting catalyst would be poor. If (a)/(b) is greater than 1.0, the middle distillate selectivity would be decreased.

High cracking activity and high middle distillate selectivity as well as the low pour point of the resulting gas oil can be satisfactorily achieved at the same time only when a catalyst comprises (a) a crystalline aluminosilicate and (b) an amorphous aluminosilicate at an extremely restricted weight ratio. This is a novel finding which can not be observed through hydrocracking of vacuum gas oils and is peculiar to the hydrocracking of paraffinic hydrocarbons and such a finding could not be expected at all.

The catalyst of the present invention can be prepared by molding a crystalline aluminosilicate and an amorphous aluminosilicate used at the above-described weight ratio into a desired shape using a binder such as alumina by a well-known process. Alternatively, if necessary, a process may be employed in which only a crystalline aluminosilicate is molded with a binder that turns into an amorphous aluminosilicate.

The catalyst of the present invention comprises a group VIII metal as active components selected from palladium and platinum. The catalyst of the present invention can be produced by loading these metals on the above-described mold by a well-known process such as impregnation or ion-exchange.

The type and amount of the metal to be loaded are arbitrary selected as needed from the group of platinum and palladium in an amount from 0.05 to 2 percent by mass. A base metal such as nickel, cobalt, tungsten, and molybdenum may be arbitrary used in combination as needed.

The catalyst of the present invention may be used in a conventional fixed bed reactor apparatus. Typical reaction conditions are a reaction temperature of 250 to 400 °C, a hydrogen pressure of 0.5 to 10 MPa, and an LHSV (liquid hourly space velocity) of paraffinic hydrocarbon feedstock of 0.5 to 10/h.

### [Industrial Applicability]

As described above, the use of a catalyst comprising (a) a crystalline aluminosilicate and (b) an amorphous aluminosilicate at a weight ratio of 0.01 ≦ (a)/(b) ≦ 1.0 can achieve satisfactorily high cracking activity and high middle distillate selectivity as well as the low pour point of the resulting gas oil at the same time in a paraffinic hydrocarbon hydrocracking process.

### [Best Mode for Carrying Out the Invention]

The present invention will be described in more detail with reference to the following examples and comparative example but are not limited thereto.

### (Example 1)

Crystalline aluminosilicate (a) and amorphous aluminosilicate (b) indicated in Table 1 below were used at an (a)/(b) weight ratio of 0.08 and boehmite in an amount of 30 percent by mass of the total amount of (a) and (b) was added thereto as a binder. The mixture was kneaded and molded into a column-like shape with a diameter of 1/16 inch (about 1.6 mm), followed by calcination thereby obtaining a catalyst support.

The support was dipped into a water soluble solution of dichlorotetraammine platinum (II) such that the solution was impregnated in an amount of 1.0 percent by mass of the support, followed by drying and calcination thereby preparing Catalyst A-1.

Catalyst A-1 was filled into a fixed bed flow reactor and used to hydrocrack a paraffinic hydrocarbon. The feedstock used herein was an FT wax whose paraffin content was 91 % and carbon number distribution was from 30 to 80. The hydrogen pressure was 5 MPa, while the LHSV of the feedstock was 2.0/h. The fraction whose boiling point was 360 °C or lower was defined as "cracked product", the lowest reaction temperature at which the conversion rate of the feed stock to the cracked product reached 60 mass % was defined as "cracking temperature", and the proportion of the middle distillate whose boiling point was from 145 to 360 °C in the cracked product obtained at the cracking temperature was defined as "middle distillate selectivity". With Catalyst A-1, the cracking temperature and middle distillate selectivity were 295 °C and 81 %, respectively. The gas oil fraction whose boiling point was from 260 to 360 °C in the cracked product had a pour point of -37.5 °C.

**Table 1**

| | Crystalline Aluminosilicate | Amorphous aluminosilicate |
|---|---|---|
| Name | (a) | (b) |
| Type | USY-type zeolite | silica-alumina |
| Tetrahedrally coordinated Al % | 82 | 0 |
| Particle diameter µm | 0.72 | 6 |
| Alumina content mass% | 7.8 | 12.0 |
| N. B. | | Pore vol.: 0.65 ml/g |

### (Examples 2 to 5)

Catalysts A-2, A-3, A-4 and A-5 were prepared by following the procedures for the preparation of Catalyst A-1 except that their (a)/(b) weight ratios were 0.015, 0.181, 0.375, and 0.814, respectively. The hydrocracking of a paraffinic hydrocarbon was conducted using each of Catalysts A-2, A-3, A-4 and A-5 in the same manner for Catalyst A-1. The results are shown in Table 2.

### (Comparative Examples 1 to 3)

Catalysts B-1, B-2 and B-3 were prepared by following the procedures for the preparation of Catalyst A-1 except that their (a)/(b) weight ratios were 0.005, 1.155, and 2.510, respectively. The hydrocracking of a paraffinic hydrocarbon was conducted using each of Catalysts B-1, B-2 and B-3 in the same manner for Catalyst A-1. The results are shown in Table 2.

### (Control experiments using vacuum gas oil as the feedstock)

The efficiency of each of Catalysts A-1, A-2, A-3, A-4, A-5, B-1, B-2, and B-3 was evaluated in the same manner as described above using a vacuum gas oil (paraffin content: 7.6%) which can be obtained through the refining process of crude oil, instead of the FT wax with 91% paraffin content. The results are shown in Table 2.

**Table 2**

| | Catalyst | Alumino-silicate (a)/(b) | Feedstock: Paraffinic Hydrocarbon | | | Feedstock: Vacuum Gas Oil (Control) | | |
|---|---|---|---|---|---|---|---|---|
| | | | Cracking Temperature °C | Middle Distillate Selectivity % | Pour Point of Gas Oil °C | Cracking Temperature °C | Middle Distillate Selectivity % | Pour Point of Gas Oil °C |
| Example 1 | A-1 | 0.08 | 295 | 81 | -37.5 | 362 | 73 | -27.5 |
| Example 2 | A-2 | 0.015 | 298 | 81 | -37.5 | 365 | 75 | -27.5 |
| Example 3 | A-3 | 0.181 | 290 | 80 | -37.5 | 360 | 73 | -27.5 |
| Example 4 (Comparative) | A-4 | 0.375 | 290 | 79 | -35.0 | 359 | 74 | -27.5 |
| Example 5 (Comparative) | A-5 | 0.814 | 290 | 77 | -35.0 | 359 | 73 | -27.5 |
| Comparative Example 1 | B-1 | 0.005 | 331 | 81 | -37.5 | 365 | 75 | -27.5 |
| Comparative Example 2 | B-2 | 1.155 | 290 | 69 | -17.5 | 358 | 73 | -27.5 |
| Comparative Example 3 | B-3 | 2.510 | 285 | 55 | -7.5 | 355 | 71 | -27.5 |

As apparent from Table 2, only the catalysts with the specific (a)/(b) weight ratio according to the present invention can satisfy high cracking activity and high middle distillate selectivity as well as the low pour point of the resulting gas oil simultaneously when the catalysts are used for the hydrocracking of paraffinic hydrocarbon. It is also apparent from the control experiments that when the feedstock was a vacuum gas oil, the catalysts with the specific (a) / (b) according to the present invention could not achieve the same excellent results.

## Claims

1. A catalyst for hydrocracking an FT wax produced by Fischer-Tropsch synthesis which comprises (a) a crystalline aluminosilicate and (b) an amorphous aluminosilicate at a weight ratio of 0.04 ≦ (a)/(b) ≦ 0.2 , wherein (a) the crystalline aluminosilicate is a USY-type zeolite and the catalyst further comprises a group VIII metal which is selected from the group consisting of platinum and palladium in an amount of 0.05 to 2 percent by mass based on the total mass of the catalyst and a binder.

2. The catalyst according to claim 1, wherein the USY-type zeolite contains alumina in an amount of 1 to 10 percent by mass.

3. A process for producing a liquid hydrocarbon comprising hydrocracking an FT wax produced by Fischer-Tropsch synthesis using the catalyst as defined in claim 1 or 2 under reaction conditions of a reaction temperature of 250 to 400°C, a hydrogen pressure of 0.5 to 10 MPa and an LHSV of 0.5 to 10 h⁻¹.

## Patentansprüche

1. Katalysator zum Hydrocracken eines durch Fischer-Tropsch-Synthese hergestellten FT-Wachses, der (a) ein kristallines Aluminosilikat und (b) ein amorphes Aluminosilikat in einem Gewichtsverhältnis von 0,04 ≤ (a)/(b) ≤ 0,2 umfasst, wobei (a) es sich bei dem kristallinen Aluminosilikat um einen Zeolith vom USY-Typ handelt und der Katalysator ferner ein Gruppe-VIII-Metall, das aus der Gruppe bestehend aus Platin und Palladium ausgewählt ist, in einer Menge von 0,05 bis 2 Massenprozent, bezogen auf die Gesamtmasse des Katalysators und des Bindemittels, umfasst.

2. Katalysator nach Anspruch 1, wobei der Zeolith vom USY-Typ Aluminiumoxid in einer Menge von 1 bis 10 Massenprozent enthält.

3. Verfahren zur Herstellung eines flüssigen Kohlenwasserstoffs, umfassend das Hydrocracken eines durch Fischer-Tropsch-Synthese hergestellten FT-Wachses unter Verwendung des Katalysators gemäß Anspruch 1 oder 2 unter Reaktionsbedingungen einer Reaktionstemperatur von 250 bis 400°C, eines Wasserstoffdrucks von 0,5 bis 10 MPa und einer LHSV von 0,5 bis 10 h⁻¹.

## Revendications

1. Catalyseur destiné à l'hydrocraquage d'une cire FT produite par synthèse de Fischer-Tropsch qui comprend (a) un aluminosilicate cristallin et (b) un aluminosilicate amorphe dans un rapport pondéral 0,04 ≤ (a)/(b) ≤ 0,2, l'aluminosilicate cristallin (a) étant une zéolithe de type USY et le catalyseur comprenant en outre un métal du groupe VIII qui est choisi dans le groupe constitué par le platine et le palladium dans une quantité de 0,05 à 2 pour cent en masse, rapporté à la masse totale du catalyseur et d'un liant.

2. Catalyseur selon la revendication 1, dans lequel la zéolithe de type USY contient de l'alumine dans une quantité de 1 à 10 pour cent en masse.

3. Procédé de production d'un hydrocarbure liquide comprenant l'hydrocraquage d'une cire FT produite par synthèse de Fischer-Tropsch à l'aide du catalyseur tel que défini dans la revendication 1 ou 2 dans les conditions réactionnelles d'une température de réaction de 250 à 400 °C, une pression d'hydrogène de 0,5 à 10 MPa et une LHSV de 0,5 à 10 h⁻¹.
